# FASCICULE DE BREVET EUROPEEN

(11) **EP 1 158 123 B1**
(45) Date de publication et mention de la délivrance du brevet: **06.10.2004**
(21) Numéro de dépôt: 01401133.2
(22) Date de dépôt: 24.04.2001
(51) Int. Cl.: E05B 65/02, E05B 9/00, E05B 1/00, E05C 9/00, H05K 5/03, H02B 1/44

(54) **Dispositif de fermeture pour coffret électrique**
Verschlussvorrichtung für elektrischen Kasten
Closure device for an electrical box

(30) Priorité: 25.05.2000 FR 0006805
(43) Date de publication de la demande: 28.11.2001
(73) Titulaire: Schneider Electric Industries SAS, 92500 Rueil-Malmaison (FR)
(72) Inventeur: Larsky, Pierre, 57450 Cappel (FR); Goerger, Christophe, 67770 Sessenheim (FR); Jereczek, Valérie, 67120 Molsheim (FR)

(56) Documents cités:
- DE-A- 3 839 205
- DE-B- 1 031 174
- FR-A- 2 777 125

## Description

La présente invention concerne un dispositif de fermeture pour coffret destiné à recevoir des appareils électriques, ce dispositif comprenant un corps fixe de serrure de forme générale tubulaire disposé dans une ouverture d'une porte du coffret, une poignée ou un arbre rotatif traversant un passage cylindrique du corps de serrure tubulaire et apte à pivoter autour de l'axe du corps pour manoeuvrer une came et/ou une tringle de fermeture.

Un tel dispositif comporte usuellement un barillet sensiblement cylindrique destiné à verrouiller la poignée en position de fermeture, par rotation d'une clé, le barillet étant logé dans la poignée avec son axe de rotation confondu avec celui du corps tubulaire. Un tel dispositif est décrit dans le document FR-A-2 777 125. Les dispositifs de fermeture connus nécessitent des pièces dont il est souhaitable de réduire le nombre et le coût de fabrication. Le document DE-A-1 031 174 décrit un dispositif de fermeture selon le préambule de la revendication 1.

L'invention a pour but de réduire le nombre et le coût de fabrication des pièces constituantes d'un dispositif de fermeture de coffret pour appareils électriques, tout en procurant de bonnes conditions d'étanchéité.

Selon l'invention, l'axe du barillet est parallèle à l'axe de la poignée et décalé par rapport à celui-ci, le barillet présentant un élément de blocage qui coopère avec un évidement du corps prévu latéralement au passage cylindrique. La poignée peut offrir sur le bord du logement désaxé prévu pour le barillet un élément élastique d'encliquetage retenant le barillet. De préférence, le corps de serrure est dans sa majeure partie sensiblement rigide et présente un élément annulaire souple d'étanchéité qui assure l'étanchéité du corps avec la paroi de la porte du coffret, le corps étant réalisé par moulage d'une matière rigide et d'une matière souple.

De même, la poignée peut avantageusement offrir une portée de forme générale cylindrique introduite dans le corps de serrure et le corps présenter un élément souple d'étanchéité réalisé par moulage bi-matière et assurant l'étanchéité entre lui-même et la portée cylindrique de la poignée.

La description va être faite ci-après d'un mode de réalisation non limitatif de l'invention, en regard des dessins annexés.

La figure 1 représente en perspective une partie d'un coffret pour appareils électriques muni du dispositif selon l'invention.

La figure 2 est une vue en perspective éclatée du dispositif de la figure 1.

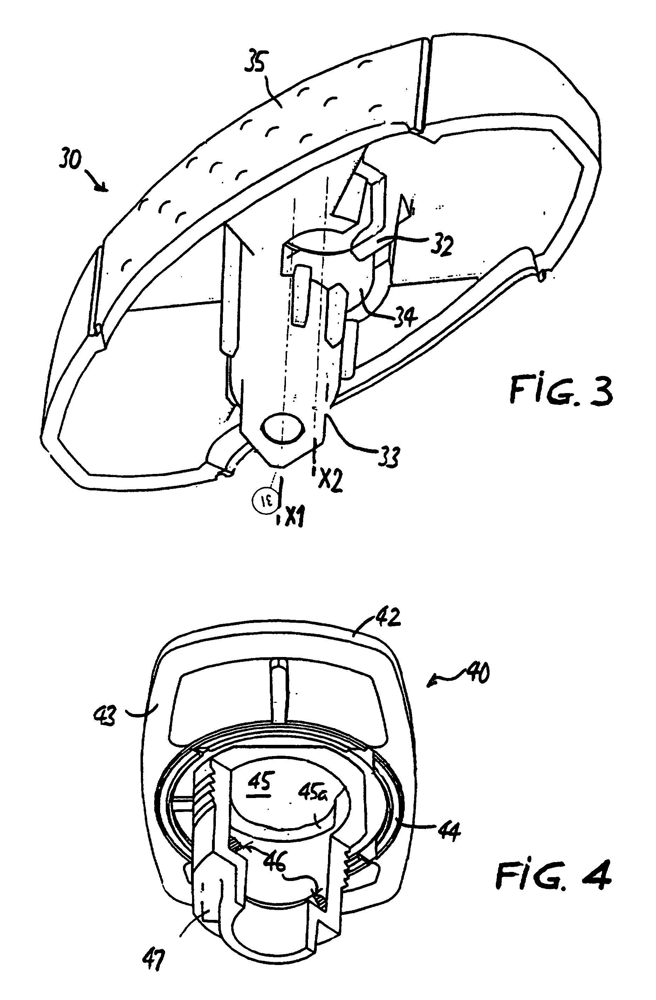

La figure 3 est une vue arrière en perspective de la poignée du dispositif.

La figure 4 montre en perspective avec arrachement le corps du dispositif.

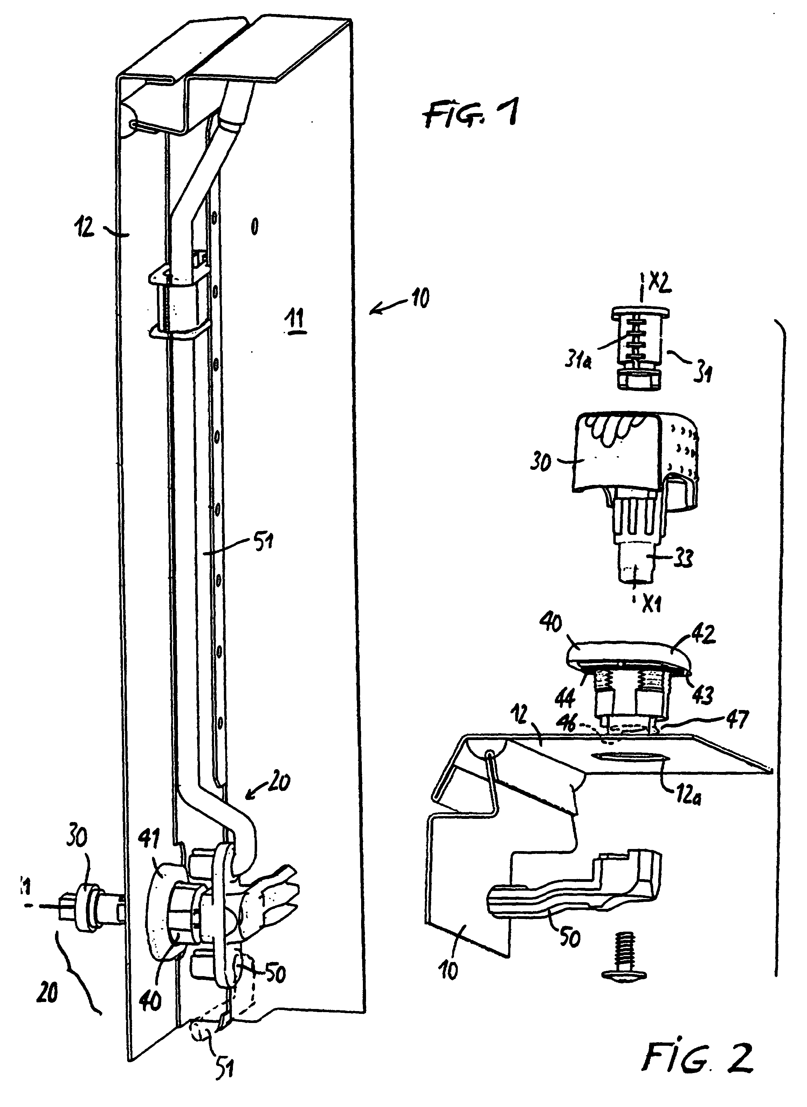

Le dispositif de fermeture est associé à un coffret 10 dont la figure 1 montre simplement une partie d'enveloppe fixe 11 et une partie de porte pivotante 12. La porte 12 est maintenue fermée par le dispositif de fermeture 20 qui comprend un axe tournant ou une poignée tournante 30 et un corps 40 fixé à la paroi de la porte. Dans la version illustrée sur la figure 1, le dispositif est du type à trois points et comprend une pièce de came 50 et deux tringles 51 fixées à la pièce de came. Dans la version illustrée sur la figure 2, le dispositif est du type à un seul point et comprend simplement la pièce de came 50.

Le corps 40 est une pièce sensiblement tubulaire de diamètre adapté à un orifice 12a de la porte 12 ; le corps 40 est fileté pour recevoir un écrou de fixation 41 et présente vers le côté extérieur de la porte un épanouissement 42 appliqué par une face plane 43 contre la face externe de la porte. Le corps 40 présente sur sa face 43 un joint d'étanchéité 44 sensiblement circulaire ou annulaire prévu pour assurer l'étanchéité de l'application du corps sur la porte. Le corps est réalisé par moulage bi-matière, en étant de préférence bi-injecté, de manière à procurer une pièce unique à partie principale rigide et joint souple intégré.

Un barillet 31 est associé à la poignée 30 pour la bloquer en position fermée. Le barillet 31 est une pièce cylindrique d'axe X2 parallèle à l'axe X1 de la poignée et décalé latéralement par rapport à celui-ci. Le barillet 31 est engagé dans un logement désaxé 34 de la poignée 30. Un doigt ou autre élément de forme appropriée 32 est prévu sur la poignée pour assurer un maintien du barillet par encliquetage. Le barillet présente au moins un élément mobile de blocage 31a qui coopère avec un évidement 45a du corps prévu latéralement au passage cylindrique 45.

La poignée présente par ailleurs une portée 33 de forme générale cylindrique introduite dans l'évidement central 45 du corps de serrure 40. Celui-ci offre un élément annulaire souple d'étanchéité 46 interne à l'évidement 45 et réalisé par moulage bi-matière comme le joint 44 pour assurer l'étanchéité entre le corps et la portée de la poignée. Le corps 40 présente aussi une butée 47 pour limiter la rotation de la came.

La poignée 30 est également réalisée par moulage bi-matière, afin de présenter au moins sur la partie médiane 35 de ses flancs une surface externe souple munie d'aspérités ou de reliefs analogues facilitant la préhension.

## Revendications

1. Dispositif de fermeture pour porte de coffret destiné à recevoir des appareils électriques, comprenant un corps fixe (40) de serrure tubulaire pouvant être disposé dans une ouverture de la porte du coffret, une poignée (30) ou un arbre rotatif traversant un passage cylindrique (45) du corps fixe (40) de serrure tubulaire et apte à pivoter autour de l'axe (X1) du corps fixe (40) de serrure tubulaire pour manoeuvrer une came (50) et/ou une tringle (51) de fermeture, un barillet (31) sensiblement cylindrique d'axe (X2) logé dans la poignée (30) et destiné à verrouiller, par rotation d'une clé autour de son axe (X2), la poignée (30) en position de fermeture, l'axe (X2) du barillet (31) étant parallèle à l'axe (X1) de la poignée (30) et décalé par rapport à celui-ci, le barillet (31) présentant un élément de blocage (31a) qui coopère avec un évidement (45a) du corps fixe (40) de serrure tubulaire prévu latéralement au passage cylindrique (45), **caractérisé par le fait que** le corps fixe (40) de serrure tubulaire est sensiblement rigide et est réalisé par moulage d'une matière rigide et d'une matière souple, de manière à présenter un élément annulaire souple (44) qui en position de montage assure l'étanchéité du corps avec la paroi de la porte (12) du coffret.

2. Dispositif selon la revendication 1, **caractérisé par le fait que** la poignée (30) offre une portée (33) de forme générale cylindrique introduite dans le corps de serrure (40) et que le corps présente un élément souple d'étanchéité (46) réalisé par moulage bi-matière et assurant l'étanchéité entre lui-même et la portée cylindrique de la poignée (30).

3. Dispositif selon la revendication 1, **caractérisé par le fait que** la poignée (30) est réalisée par moulage bi-matière de manière à présenter une surface externe souple.

4. Dispositif selon la revendication 1, **caractérisé par le fait que** le corps de serrure (40) présente une butée (47) pour la came.

5. Dispositif selon la revendication 1, **caractérisé par le fait que** la poignée (30) a sur le bord de son logement désaxé (34) du barillet (31) un élément élastique (32) d'encliquetage retenant le barillet.

## Patentansprüche

1. Schließvorrichtung für die Tür von Abdeckungskästen von elektrischen Geräten, bestehend aus einem röhrenförmigen Festkörper(40) zum Verschließen, das in einer Türöffnung des Abdeckungskastens angeordnet sein kann, einem Handhebel (30) oder einer Drehwelle, der/die sich in einem Zylindergang (45) des röhrenförmigen Festkörpers (40) zum Verschließen befindet und um die Achse (X1) des röhrenförmigen Festkörpers (40) zum Verschließen drehbar ist, zur Betätigung von einer Verschlussnocke (50) und/oder einer Verschlussstange (51), einem annähernd zylinderförmigen Federgehäuse (31), dessen Achse (X2) im Inneren des Handgriffs (30) gelagert ist und zur Verriegelung des Handgriffs (30) in der Schließposition mittels Schlüsseldrehung um seine Achse (X2)dient, wobei die Achse (X2)des Federgehäuses parallel zur Achse (X1) des Handgriffs (30) und ihr gegenüber verschoben ist, das Federgehäuse (31) ein Sperrelement (31a) aufweist, das mit einer Aussparung (45a) des röhrenförmigen Festkörpers (40) zum Schließen, die seitlich des zylinderförmigen Abschnittes (45) vorgesehenen ist, zusammenwirkt, **dadurch gekennzeichnet, dass** der röhrenförmige Festkörper (40) zum Schließen annähernd steif ist und mittels Spritzguss von einem steifen und einem weichen Stoff hergestellt wird, derart, dass er ein weiches ringförmiges Element (44) besitzt, das im zusammengebauten Zustand die Abdichtung zwischen dem Körper und der Türwand (12) des Abdeckungskastens gewährleistet.

2. Vorrichtung nach Anspruch 1, **dadurch gekennzeichnet, dass** der Handgriff (30) einen Lagerzapfen (33) mit einer zylindrischen Grundform aufweist, der in den Schließkörper (40) eingeführt ist und dass der Körper ein weiches Dichtungselement (46) besitzt, das mittels Zweistoff-Spritzguss hergestellt wurde und die Abdichtung zwischen dem Körper und dem zylinderförmigen Lagerzapfen (30) des Handgriffs gewährleistet.

3. Vorrichtung nach Anspruch 1, **dadurch gekennzeichnet, dass** der Hangriff mittels Zweistoff-Spritzguss hergestellt wurde und deshalb eine weiche Außenflâche besitzt.

4. Vorrichtung nach Anspruch 1, **dadurch gekennzeichnet, dass** der Schließkörper (40) einen Anschlag (47) für die Nocke besitzt.

5. Vorrichtung nach Anspruch 1, **dadurch gekennzeichnet, dass** der Handgriff (30) am Rand seiner außermittigen Lagerung (34) des Federgehäuses (31) eine elastisches Rastsperre aufweist (32), die das Federgehäuse zurückhält.

## Claims

1. Fastening device for panel doors intended to be equipped with electric apparatus, comprising a fixed tubular lock body (40) that can be fitted into an opening of the panel door, a handle (30) or a rotating shaft passing through a cylindrical hole (45) of the fixed tubular lock body (40) and capable of pivoting around the axis (X1) of the fixed tubular lock body (40) in order to manoeuvre a cam (50) and/or a fastening rod (51), a substantially cylindrical barrel (31) of axis (X2) housed in the handle (30) and intended to lock, via the turning of a key around its axis (X2), the handle in the fastening position, the axis (X2) of the barrel (31) being parallel to the axis (X1) of the handle (30) and off centre in relation to the latter, the barrel (31) having a blocking element (31a) which works in conjunction with a recess (45a) of the fixed tubular lock body (40) designed laterally in the cylindrical hole (45), **characterised in** the fact that the fixed tubular lock body (40) is substantially rigid and is made via moulding of a rigid material and a resilient material, so as to have a resilient ring element (44) which in mounting position ensures the sealing of the body with the side of the panel door (12).

2. Device according to claim 1, **characterised in** the fact that the handle (30) has a bearing (33) of normally cylindrical shape introduced into the lock body (40) and that the body has a resilient sealing element (46) made via moulding of two materials and ensuring the sealing between itself and the cylindrical bearing of the handle (30).

3. Device according to claim 1, **characterised in** the fact that the handle (30) is made via moulding of two materials so as to have a resilient external surface.

4. Device according to claim 1, **characterised in** the fact that the lock body (40) has a stop (47) for the cam.

5. Device according to claim 1, **characterised in** the fact that the handle (30) has on the edge of its off-centred housing (34) of the barrel (31) an elastic indexing mechanism (32) retaining the barrel.
